Europäisches Patentamt

European Patent Office

Office européen des brevets

(19)

(11) Veröffentlichungsnummer: **0 507 211 A2**

# (12) EUROPÄISCHE PATENTANMELDUNG

(21) Anmeldenummer: **92105190.0**

(22) Anmeldetag: **26.03.92**

(51) Int. Cl.5: **H02K 15/02**, H02K 3/34

(30) Priorität: **02.04.91 DE 4110585**

(43) Veröffentlichungstag der Anmeldung:
**07.10.92 Patentblatt 92/41**

(84) Benannte Vertragsstaaten:
**AT DE FR GB IT NL**

(71) Anmelder: **HOHENLOHER SPULENKÖRPERFABRIK GmbH & Co.**
**Karlsvorstadt 42**
**W-7110 Öhringen(DE)**

(72) Erfinder: **Lehmann, Eberhard, Dipl.-Ing.**
**Goldbergstrasse 11**
**W-Pfedelbach-Windischenbach(DE)**
Erfinder: **Ahrens, Peter**
**Friedenstrasse 22**
**W-7110 Oehringen(DE)**

(74) Vertreter: **Lins, Edgar, Dipl.-Phys. et al**
**Patentanwälte Gramm + Lins**
**Theodor-Heuss-Strasse 1**
**W-3300 Braunschweig(DE)**

(54) Vorrichtung zur Herstellung eines mit einer Isolationsschicht versehenen Kerns einer elektrischen Spule sowie mit der Vorrichtung herstellbarer Kern.

(57) Zum Aufbringen einer Isolationsschicht auf einen durch ein Blechpaktet gebildeten Kern einer elektrischen Spule wird der Kern (1) mit einem äußeren Blech des Blechpakets mit Abstand zu einem ersten Teil (9) des Spritzwerkzeugs gehalten, auf der gegenüberliegenden Seite des Blechpakets ein relativ zum ersten Teil (9) senkrecht zur Oberfläche des Blechpakets bewegbares zweites Teil (10) des Spritzwerkzeugs auf dem Kern (1) mit kleinen Auflageflächen federnd abgestützt und mit dem zweiten Teil (9) des Spritzwerkzeugs und der Oberfläche des Kerns (1) eine durch die Spritzgußmasse ausfüllbare Kavität gebildet.

Fig. 2

EP 0 507 211 A2

Die Erfindung betrifft eine Vorrichtung zur Herstellung eines mit einer Isolationsschicht versehenen, durch ein Blechpaket gebildeten Kerns einer elektrischen Spule, bestehend aus einem Spritzwerkzeug, dessen Spritzgußform aus einem ersten Teil und einem relativ zum ersten Teil bewegbaren zweiten Teil besteht, wobei beide Teile an dem Kern unter Bildung jeweils einer mit Spritzgußmasse ausfüllbaren Kavität anliegen. Die Erfindung betrifft ferner einen mit der Vorrichtung herstellbaren Kern.

Zur Vermeidung von Kurzschlüssen ist es wesentlich, daß Kerne, auf die Spulen gewickelt werden, von einer Isolationsschicht umgeben sind. Für größere Spulen werden hierfür gespritzte Spulenkörper aus isolierendem Kunststoffmaterial verwendet. Bei kleineren Spulen, beispielsweise für die Motorwicklungen eines Kopftrommelmotors eines Videorekorders, lassen sich Spulenkörper aus Platz- und Montagegründen nicht sinnvoll verwenden. Es ist daher bekannt, den durch ein Bleckpaket gebildeten und durch einen Stanzvorgang in seine gewünschte Form gebrachten Kern mit einem isolierenden Kunststoff zu lackieren, um ein direktes Aufwickeln des Spulendrahtes auf den Kern zu ermöglichen. Ein weiteres Problem besteht darin, daß die Spulenanordnung mit Anschlußstiften versehen sein muß, um in einfacher Weise kontaktiert werden zu können. Es ist daher bekannt, Anschlußdrähte in ein der Form des Kerns entsprechendes Kunststoffteil einzuspritzen und dieses Kunststoffteil vor dem Spulenwickelvorgang an dem Kern zu fixieren. Bei einem Kopftrommelmotor mit sternförmig erstreckten Kernarmen weist das entsprechend sternförmig ausgebildete Kunststoffteil Positionierstifte auf, die in entsprechende Ausnehmungen des Kerns eingreifen. Freie, nicht umspritzte und radial erstreckte Drahtenden der Anschlußdrähte werden beim automatischen Spulenwickelvorgang mit dem Spulendraht kontaktiert und anschließend um etwa 90° umgebogen, um dann nicht mehr radial über den Kern hervor zu stehen. Die anderen Enden der Anschlußdrähte sind in einem inneren Ring um 90° nach unten abgewinkelt und dienen der Kontaktierung der Spulen. Der Preis des so hergestellten Motors wird durch den Lackiervorgang und die Montage des Kerns und des gespritzten Kunststoffteils mit den Anschlußdrähten wesentlich mitbestimmt.

Es ist daher bereits vorgeschlagen worden, die isolierende Umhüllung des Kerns nicht durch eine Lackierung sondern durch ein Umspritzen des Kerns mit einem isolierenden Kunststoffmaterial herzustellen. Dieses Verfahren hätte den Vorteil, daß die Anschlußdrähte gleich mit eingespritzt werden könnten. Dieser Gedanke ist jedoch nicht zur praktischen Realisierung gelangt, weil es sich gezeigt hat, daß die Stärke des Kerns erheblichen Toleranzen unterliegt. Ein beispielsweise aus 8 bis 10 aufeinander gestapelten Blechen gebildeter Kern kann Toleranzen von bis zu 7/10 mm aufweisen, wenn für die Einzelbleche eine übliche Toleranz von beispielsweise 8/100 mm zugelassen wird. Werden Kerne mit unterschiedlicher Dicke in Stapelrichtung in einem Spritzwerkzeug umspritzt, entstehen unterschiedliche Stärken der gespritzten Isolationsschicht. Dies führt zu einer Verschlechterung des Induktionsflusses, was durch eine Erhöhung der Windungszahl der Spule aufgefangen werden muß. Bei den in Rede stehenden kompakten Bauteilen ist aber eine Erhöhung der Windungszahl aus Platzgründen nicht mehr möglich, so daß in der Praxis das Verfahren, den Kern mit einer Isolationsschicht zu umspritzen, nicht zum Erfolg geführt hat und das aufwendige Lackierungsverfahren beibehalten worden ist.

Durch die US 4,663,835 ist offenbart, einen als Blechpaket ausgebildeten Kern auf seinen Stirnseiten und im zylindrischen Innenraum mit einer Beschichtung zu versehen. Hierzu wird der Kern zwischen einem Werkzeugoberteil und einem Werkzeugunterteil eingespannt, die beide mit den jeweiligen Kernflächen Kavitäten bilden, die mit Spritzmaterial ausgefüllt werden können. Wesentlich ist hierbei, daß die Auflageflächen der Werkzeuge auf den Oberflächen des Kerns abdichten. Dies führt in der Praxis zu erheblichen Schwierigkeiten. Eine Beschichtung der vertikalen Seitenflächen der Kernarme ist mit der beschriebenen Vorrichtung nicht möglich.

Der Erfindung liegt demgegenüber die Aufgabe zugrunde, daß Aufbringen von auch in vertikaler Richtung geschlossenen Isolationsschichten auf einen Kern zu vereinfachen, ohne eine Verschlechterung der elektrischen Werte der Spule hervorzurufen.

Diese Aufgabe wird erfindungsgemäß mit einer Vorrichtung der eingangs erwähnten Art gelöst, bei der das zweite bewegbare Teil ein die Spritzgußform zusammen mit dem ersten Teil schließendes starres Werkzeugteil und ein sich auf dem Kern mit Vorsprüngen mit geringer Auflagefläche abstützendes, federnd gelagertes Teil aufweist und daß der Kern an erhabenen Teilen des ersten Teils der Spritzgußform anliegt und das federnd gelagerte Teil mit in seiner Bewegungsrichtung stehenden Kanten aufweisenden Formstücken mit Abstand zu den entsprechend stehenden Kanten des Kerns geführt ist und anschließend in das erste Teil verzahnt und seitlich zur Bewegungsrichtung abdichtend übertief eingreift.

Erfindungsgemäß wird erreicht, daß durch das erfindungsgemäße Verfahren wird erreicht, daß beim Umspritzen des Kerns trotz unterschiedlicher Dicken des Kerns in Stapelrichtung der Bleche eine konstante Isolationsschichtdicke produziert wird.

Dies wird dadurch ermöglicht, daß ein Teil des Spritzwerkzeuges federnd gelagert ist und sich auf der durch ein äußeres Blech gebildeten Oberfläche des Kerns abstützt. Hierdurch wird sichergestellt, daß die Kavität, die durch Spritzgußmasse ausgefüllt wird, relativ zur Oberfläche immer gleich groß ist. Die Federstärke der federnden Lagerung des Teils des Spritzwerkzeuges muß dabei so groß gewählt werden, daß die Feder durch den Spritzdruck selbst nicht betätigt werden kann.

Für eine Umhüllung des Kerns auch auf senkrecht zu der Oberfläche des Kerns stehenden Kanten wird der bewegbare zweite Teil des Spritzwerkzeuges mit Abstand von senkrecht zur Oberfläche stehenden Kanten des Blechpakets geführt und seitlich abdichtend in das erste Teil des Spritzwerkzeugs verzahnt eingefahren. Hierdurch wird eine Abdichtung des gesamten Forminhalts des Spritzwerkzeugs auch bei unterschiedlichen Dicken des Blechpakets erreicht, da das zweite Teil des Spritzwerkzeugs in das erste Teil für unterschiedliche Dicken des Kerns unterschiedlich tief verzahnt eingreift, die seitliche Abdichtung jedoch in jedem Fall erhalten bleibt.

In einer bevorzugten Ausführungsform ist das erste Teil des Spritzwerkzeugs ein Unterteil, so daß der Kern auf Abstandshalter gelegt werden kann und dort mit seinem Gewicht hält. Das zweite Teil des Spritzwerkzeugs wird dann als Oberteil lotrecht verfahren.

Die erfindungsgemäße Vorrichtung erlaubt eine zuverlässige Herstellung einer Umhüllungsschicht mit konstanter Dicke, bei der gleichzeitig Anschlußdrähte eingespritzt werden können. Hierfür werden Anschlußdrähte in das Spritzwerkzeug mit Abstand von dem Kern eingelegt und die Anschlußdrähte bei dem Aufbringen der Isolationsschicht von Verdickungen der Isolationsschicht umhüllt. Das bisher separat ausgeführte Spritzgußteil für die Anschlußdrähte kann erfindungsgemäß einstückig mit der Isolationsschicht hergestellt werden.

Dabei ist es vorteilhaft, wenn der Kern mit in Bewegungsrichtung des zweiten Teils des Spritzwerkzeugs mit den Anschlußdrähten fluchtenden Durchgangsöffnungen versehen wird, durch die ein in dem zweiten Teil federnd gelagerter Stift hindurchgeführt und gegen den betreffenden Anschlußdraht gedrückt wird. Der Stift wirkt dabei als Niederhalterstift für den Anschlußdraht und verhindert ein Verschieben des Anschlußdrahtes beim Einspritzen der Spritzgußmasse in die Form.

Zum Einspritzen der Anschlußdrähte weist das Spritzwerkzeug vorzugsweise mit Spritzgußmasse ausfüllbare Ausnehmungen auf, in die Anschlußdrähte mit Abstand vom Kern und vom Spritzwerkzeug einlegbar sind. Diese Ausnehmungen befinden sich vorzugsweise in einem Unterteil des Spritzwerkzeugs. In dem anderen Teil können Niederhalterstifte für die Anschlußdrähte federnd gelagert sein. Dabei können die Niederhalterstifte durch Durchgangsöffnungen des Kerns hindurch zur gegen das erste Teil des Spritzwerkzeugs drückenden Anlage an die Anschlußdrähte gelangen.

Es ist zweckmäßig, wenn eine Einspritzöffnung für die Spritzgußmasse zwischen Kern und dem ersten Teil des Spritzwerkzeugs einmündet, so daß in der Regel die Spritzgußmasse von unterhalb des Blechpakets in die Gießform eindringt.

Ein erfindungsgemäßer, mit einer beschriebenen Vorrichtung herstellbarer Kern besteht aus einem Blechpaket mit einer Mehrzahl von radial erstreckten Kernarmen, wobei eine gespritzte Isolationsschicht die Kernarme zylindrisch vollständig umschließt und auf der Unterseite des Kerns Verdickungen aufweist, in die die Anschlußdrähte eingespritzt sind.

Die Erfindung wird im folgenden anhand eines in der Zeichnung dargestellten Ausführungsbeispiels näher erläutert. Es zeigt:

Figur 1 -      eine Draufsicht auf einen erfindungsgemäß beschichteten Kern

Figur 2 -      einen Vertikalschnitt durch eine Vorrichtung zum Umspritzen des Kerns

Figur 3 -      eine vergrößerte Darstellung eines Details aus Figur 2 mit dem Kern, der hergestellten Umhüllung sowie einem eingespritzten Anschlußdraht

Figur 4 -      einen Vertikalschnitt entlang der Linie A-A in Figur 1 mit dem zugehörigen Spritzwerkzeug.

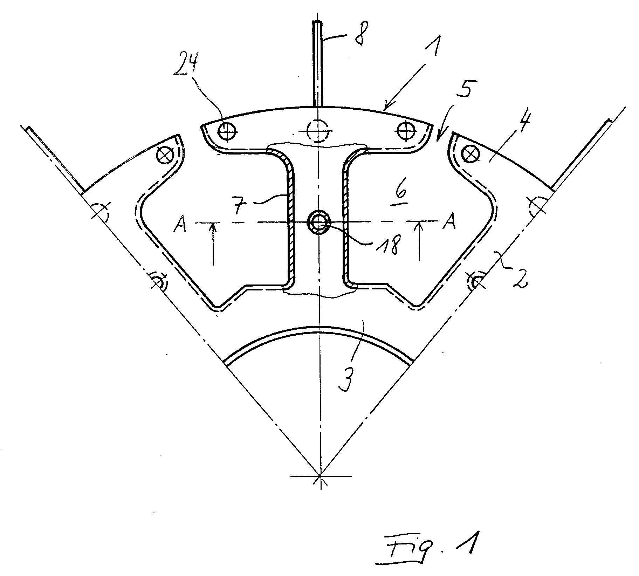

Figur 1 läßt einen rotationssymmetrischen Kern 1 erkennen, der im dargestellten Ausführungsbeispiel aus neun radial erstreckten Kernarmen 2 besteht, die in einen zentralen inneren Ring 3 münden. Die Kernarme verbreitern sich an ihren Enden zu kreisbogenförmigen Abschlußteilen 4, die durch kleine Spalte 5 voneinander getrennt sind. Zwischen den Armen besteht ein größerer Zwischenraum 6. Wie insbesondere in der teilweise geschnittenen Darstellung des mittleren Kernarms 2 in Figur 1 zu erkennen ist, ist der gesamte Kern - mit Ausnahme der Kreisbogen-Außenseite mit einer gleichmäßig dicken Isolationsschicht 7 umgeben. Die in Figur 1 gezeigte Draufsicht läßt erkennen, daß unterhalb des Kerns 1 Anschlußdrähte 8 befestigt sind, die radial über die Außenkontur des Kerns 1 hinausstehen und an diesem Ende unbeschichtet sind.

Die Zwischenräume 6 zwischen den Kernarmen 2 werden im wesentlichen durch (nicht dargestellte) Spulenwicklungen ausgefüllt, deren Drahtende mit dem nicht isolierten Ende des Anschlußdrahts 8 kontaktiert wird. Die Anordnung stellt dann das Kernstück eines Kopftrommelmotors zum Antrieb der Kopftrommel eines Videorekorders dar.

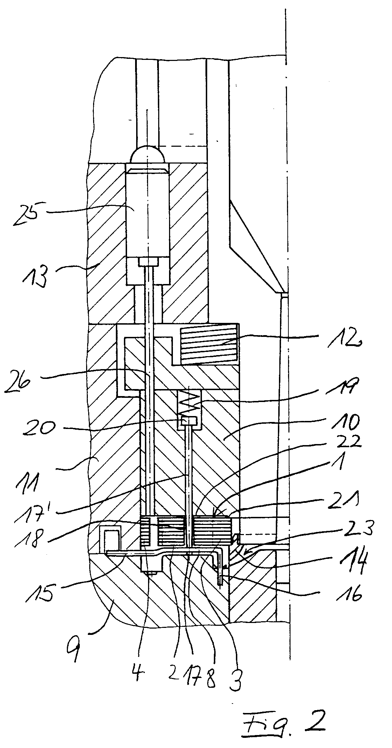

Figur 2 läßt in ihrer Schnittdarstellung den Kern 1 in Form eines horizontal geschichteten Blechpakets erkennen, wobei der Schnitt durch den inneren Ring 3 einen Arm 2 und das zugehörige bogenförmige Ende 4 verläuft. Der Kern 1 ist in ein Spritzwerkzeug eingelegt, das ein ortsfestes erstes Teil 9 als Unterteil und ein federnd gelagertes zweites Teil 10 als Oberteil aufweist. Das Oberteil 10 wird radial außen durch ein feststehendes Werkzeugteil 11 begrenzt und stützt sich nach oben hin über eine Druckfeder 12 an einem weiteren ortsfesten Werkzeugteil 13 ab. Die Unterseite des Kerns 1 liegt am inneren Rand des Rings 3 auf einem ringförmigen Abstandhalter 14 auf und wird so in einem benötigten Abstand zur Oberseite des unteren ersten Teils 9 des Spritzwerkzeugs gehalten. In den Zwischenraum ist der Anschlußdraht 8 eingelegt, der mit einem horizontal radial nach außen zeigenden Ende 15 zwischen dem ersten Teil 9 und dem Werkzeugteil 11 eingesteckt ist und dort unbeschichtet bleibt. Ein radial inneres, um 90° nach unten abgewinkeltes Ende 16 des Anschlußdrahtes 8 ragt in eine entsprechende Bohrung des ersten Teils 9 des Spritzwerkzeugs hinein und bleibt ebenfalls unbeschichtet. Durch einen Abstandshalter 17 wird der Anschlußdraht 8 in einem gewissen Abstand zur Oberseite des ersten Teils 9 des Spritzwerkzeugs gehalten.

Durch eine Durchgangsöffnung des zweiten Teils 10 des Spritzwerkzeugs ragt ein Stift 17', der ferner durch eine Durchgangsöffnung 18 eines Kernarms 2 hindurch geführt ist und von oben den Anschlußdraht 8 gegen den unter dem Anschlußdraht 8 befindlichen Abstandshalter 17 drückt. Der Anpreßdruck wird durch eine Druckfeder 19 erzeugt, die einerseits auf einen Kopf 20 des Stifts 17' einwirkt und sich mit ihrem anderen Ende an einer Wand des zweiten Teils 10 des Spritzwerkzeugs abstützt.

Durch einen (nicht dargestellten) Antrieb ist das zweite Teil 10 des Spritzwerkzeugs zusammen mit den Werkzeugteilen 11 und 13 als Einheit lotrecht nach oben verfahrbar, um das Einlegen des Kerns 1 und der Anschlußdrähte 8 zu ermöglichen. Durch ein Verfahren nach unten wird die Form geschlossen, wobei das zweite Teil 10 des Spritzwerkzeugs am radial inneren Rand des Rings 3 mit einem ringförmigen Vorsprung 21 zur Anlage kommt. Die sich von dem ringförmigen Vorsprung 21 nach radial außen, d. h. über dem Kern 1 erstreckende Fläche 22 ist gegenüber dem Vorsprung 21 um das Maß der gewünschten Schichtdicke zurückversetzt, so daß diese Fläche 22 zusammen mit der Oberfläche des Kerns 1 eine Kavität bildet, die durch die Spritzgußmasse ausgefüllt wird, wodurch die Isolationsschicht durch die Zurückversetzung der Fläche 22 gegenüber dem ringförmigen Vorsprung 21 bestimmten Schichtdicke erzeugt wird.

Eine Einspritzöffnung 23 mündet zwischen Kern 1 und dem unteren, ersten Teil 9 des Spritzwerkzeugs ein, so daß die Spritzgußmasse von unterhalb des Kerns 1 eingespritzt wird.

In Figur 2 nicht erkennbar, jedoch in Figur 1 angedeutet, sind Auflagepunkte 24 für das zweite Teil 10 des Spritzwerkzeugs am radial äußeren Ende des Kerns 1, auf die entsprechende Vorsprünge des zweiten Teils 10 des Spritzwerkzeugs zur Erhöhung der Genauigkeit der Schichtdicke drücken.

In dem Werkzeugteil 13 ist ein Hydraulikzylinder 25 gelagert, mit dem ein durch das zweite Teil 10 hindurch geführter Auswerferstift 26 verbunden ist. Der Auswerferstift 26 wird beim Öffnen des Spritzwerkzeugs betätigt und verhindert eine Mitnahme des umspritzten Kerns 1 mit der Öffnungsbewegung des Oberteils des Spritzwerkzeugs.

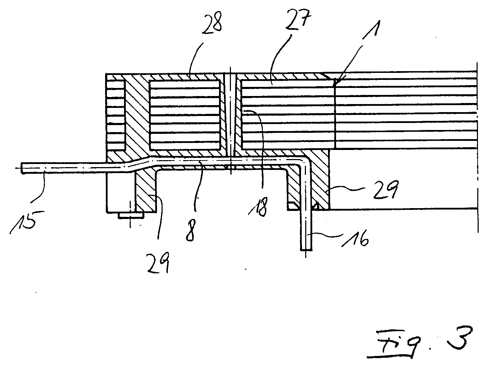

Figur 3 verdeutlicht, daß der Kern 1 aus einer Mehrzahl von aufeinander gestapelten Blechen 27 aufgebaut ist und an seiner durch das oberste Blech 27 gebildeten Oberseite eine Isolationsschicht 28 aufweist, deren Schichtdicke durch die Zurückversetzung der Fläche 22 des zweiten Teils 10 des Spritzwerkzeugs gegenüber den Vorsprüngen 21 bestimmt ist. Aufgrund entsprechender Ausnehmungen im unteren ersten Teil 9 des Spritzwerkzeugs sind Verdickungen der Beschichtung gebildet, in denen die Anschlußdrähte 8 eingespritzt sind.

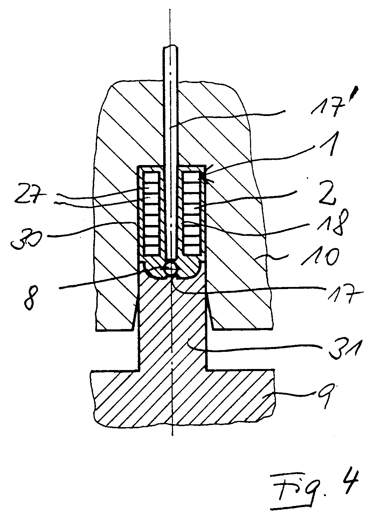

Figur 4 zeigt das Zusammenwirken des ersten Teils 9 mit dem zweiten Teil 10 des Spritzwerkzeugs im Bereich eines Kernarms 2 des Kerns 1. Mit dem Abstandshalter 17 wird der horizontal verlaufende Teil des Anschlußdrahtes 8 in einer definierten Lage gehalten, die durch den von oben federnd auf den Draht drückenden Stift 26 fixiert ist. Die Dicke der Schicht an den vertikalen Wänden des Kernarms 2 wird durch eine entsprechende Breite einer Ausnehmung 30 in dem zweiten, bewegbaren Teil 10 des Spritzwerkzeugs bestimmt. Das obere Teil 10 übergreift verzahnt einen die Anordnung von unten haltenden, nach oben ragenden Steg 31 des unteren ersten Teils 9 des Spritzwerkzeugs, wobei die beiden Teile 9, 10 so gefertigt sind, daß sie dabei eine seitliche Abdichtung für die Spritzgußmasse herstellen.

Figur 4 verdeutlicht, daß die Abdichtung auch bei unterschiedlichen Höhen des Kerns 1 aufgrund der Stapelung der Bleche 27 erzielt wird, weil für unterschiedliche Höhen des Kerns lediglich ein unterschiedlich langer Überlappungsbereich für die vertikalen Wände der beiden Teile 9, 10 des Spritzwerkzeugs entsteht, der jedoch so gewählt wird, daß für alle in Betracht zu ziehenden Toleranzen eine sichere Abdichtung für die Spritzgußmasse erzielt wird.

Wesentlich ist, daß die größeren Maßtoleranzen bei einem aus einem Blechpaket gebildeten Kern 1 nur in Stapelrichtung auftreten, während in den anderen Richtungen mit größeren Toleranzen nicht gerechnet zu werden braucht, da die Maße in den anderen Richtungen durch beliebig genau herzustellende Stanzwerkzeuge vorgegeben werden. Demzufolge ist das dargestellte Spritzwerkzeug so ausgebildet, daß eine unterschiedliche Höhe des Kerns 1 kompensiert werden kann, während für andere Dimensionen keine Kompensationsmaßnahmen erforderlich sind.

**Patentansprüche**

1. Vorrichtung zur Herstellung eines mit einer Isolationsschicht versehenen, durch ein Blechpaket gebildeten Kerns (1) einer elektrischen Spule, bestehend aus einem Spritzwerkzeug, dessen Spritzgußform aus einem ersten Teil (9) und einem relativ zum ersten Teil (9) bewegbaren zweiten Teil (10, 11) besteht, wobei beide Teile (9; 10, 11) an dem Kern (1) unter Bildung jeweils einer mit Spritzgußmasse ausfüllbaren Kavität anliegen, **dadurch gekennzeichnet, daß** das zweite bewegbare Teil (10, 11) ein die Spritzgußform zusammen mit dem ersten Teil (9) schließendes starres Werkzeugteil (11) und ein sich auf dem Kern (1) mit Vorsprüngen (21) mit geringer Auflagefläche abstützendes, federnd gelagertes Teil (10) aufweist und

   daß der Kern (1) an erhabenen Teilen (31) des ersten Teils (9) der Spritzgußform anliegt und das federnd gelagerte Teil (10) mit in seiner Bewegungsrichtung stehenden Kanten aufweisenden Formstücken (30) mit Abstand zu den entsprechend stehenden Kanten des Kerns (1) geführt ist und anschließend in das erste Teil (9) verzahnt und seitlich zur Bewegungsrichtung abdichtend übertief eingreift.

2. Vorrichtung nach Anspruch 1, dadurch gekennzeichnet, daß das erste Teil (9) ein Unterteil und das zweite Teil (10, 11) ein Oberteil des Spritzwerkzeugs ist und daß das zweite Teil (10, 11) lotrecht verfahrbar ist.

3. Vorrichtung nach Anspruch 1 oder 2, dadurch gekennzeichnet, daß das Spritzwerkzeug mit Spritzgußmasse ausfüllbare Ausnehmungen aufweist, in die Anschlußdrähte (8) mit Abstand vom Kern (1) und vom Spritzwerkzeug (9, 10, 11) einlegbar sind.

4. Vorrichtung nach Anspruch 3, dadurch gekennzeichnet, daß sich die Ausnehmungen in dem Unterteil (9) des Spritzwerkzeugs befinden.

5. Vorrichtung nach Anspruch 3 oder 4, dadurch gekennzeichnet, daß in dem zweiten Teil (10, 11) des Spritzwerkzeugs Niederhalterstifte (17) für Anschlußdrähte (8) federnd gelagert sind.

6. Vorrichtung nach Anspruch 5, dadurch gekennzeichnet, daß die Niederhalterstifte (17) durch Durchgangsöffnungen (18) des Kerns (1) hindurch zur gegen das erste Teil (9) des Spritzwerkzeugs rückenden Anlage an die Anschlußdrähte (8) gelangen.

7. Vorrichtung nach einem der Ansprüche 1 bis 6, dadurch gekennzeichnet, daß eine Einspritzöffnung (23) für die Spritzgußmasse zwischen Kern (1) und dem ersten Teil (9) des Spritzwerkzeugs einmündet.

8. Kern einer elektrischen Spule, herstellbar mit einer Vorrichtung nach einem der Ansprüche 3 bis 7, bestehend aus einem Blechpaket mit einer Mehrzahl von radial erstreckten Kernarmen (2), gekennzeichnet durch eine die Kernarme (2) zylindrisch vollständig umschließende gespritzte Isolationsschicht (7), die auf der Unterseite des Kerns (1) Verdickungen aufweist, in die Anschlußdrähte (8) eingespritzt sind.

Fig. 1

25

13

26

20

11

17'

18

15

9

4   2 17 8   3

12

19

10

22

1

21

23

14

16

_Fig._ 2

7

Fig. 3

Fig. 4